# EUROPÄISCHE PATENTSCHRIFT

(11) **EP 4 441 481 B1**
(45) Veröffentlichungstag und Bekanntmachung des Hinweises auf die Patenterteilung: **27.08.2025**
(21) Anmeldenummer: 22818030.3
(22) Anmeldetag: 17.11.2022
(51) Int. Cl.: G01M 1/16

(54) **WUCHTMASCHINEN-SCHUTZABDECKUNG, WUCHTMASCHINE UND VERFAHREN ZU EINER WIEDERAUFBEREITUNG EINER WUCHTMASCHINEN-SCHUTZABDECKUNG**
PROTECTIVE COVER FOR BALANCE TEST BENCH, BALANCE TEST BENCH AND PROCEDURE FOR RECONDITIONING A BALANCE TEST BENCH PROTECTIVE COVER
HOUSSE DE PROTECTION POUR BANC D'ESSAI D'EQUILIBRE, BANC D'ESSAI D'EQUILIBRE ET PROCEDURE DE RECONDITIONNEMENT D'UN BANC D'ESSAI D'EQUILIBRE HOUSSE DE PROTECTION

(30) Priorität: 30.11.2021 DE 102021131461
(43) Veröffentlichungstag der Anmeldung: 09.10.2024
(73) Patentinhaber: E. Zoller GmbH & Co. KG Einstell- und Messgeräte, 74385 Pleidelsheim (DE)
(72) Erfinder: PFAU, Christian, 74379 Ingersheim (DE); ZOLLER, Alexander, 74385 Pleidelsheim (DE)
(74) Vertreter: Daub, Thomas
(86) Internationale Anmeldenummer: PCT/EP2022/082208
(87) Internationale Veröffentlichungsnummer: WO 2023/099222

(56) Entgegenhaltungen:
- DE-A1- 102012 110 146
- DE-A1- 102019 104 097
- JP-A- 2016 095 286
- US-A1- 2019 041 289

## Beschreibung

### Stand der Technik

Die Erfindung betrifft eine Wuchtmaschinen-Schutzabdeckung nach dem Oberbegriff des Anspruchs 1, eine Wuchtmaschine nach dem Anspruch 17 und ein Verfahren zu einer Wiederaufbereitung einer Wuchtmaschinen-Schutzabdeckung nach Anspruch 18.

Es ist bereits vorgeschlagen worden, dass Arbeitsbereiche von Wuchtmaschinen durch Abdeckungen geschützt werden. Diese Abdeckungen sind jedoch einer Alterung und/oder einem Verschleiß unterworfen.

Die Aufgabe der Erfindung besteht insbesondere darin, eine gattungsgemäße Vorrichtung mit vorteilhaften Abdeckeigenschaften bereitzustellen. Die Aufgabe wird erfindungsgemäß durch die Merkmale der Patentansprüche 1, 17 und 18 gelöst, während vorteilhafte Ausgestaltungen und Weiterbildungen der Erfindung den Unteransprüchen entnommen werden können.

Für die Erfindung relevante Dokumente aus dem Stand der Technik sind die folgenden Patentdokumente: DE 10 2012 110146 A1, JP 2016 095286 A, US 2019/041289 A1 und DE 10 2019 104097 A1.

### Vorteile der Erfindung

Die Erfindung geht aus von einer Wuchtmaschinen-Schutzabdeckung zu einem zumindest temporären Verschließen eines Wuchtraums einer Wuchtmaschine, mit zumindest einem ersten transparenten Element, mit zumindest einem zweiten transparenten Element und mit einer Rahmeneinheit.

Es wird vorgeschlagen, dass die transparenten Elemente derart ausgeformt und/oder angeordnet sind, dass sie den Wuchtraum zu zumindest einer Seite begrenzen können, vorzugsweise den Wuchtraum zu zumindest einer Seite begrenzen, wobei die beiden transparenten Elemente derart von der Rahmeneinheit gehaltert sind, dass sie zusammen eine doppelwandige Begrenzung des Wuchtraums zu der zumindest einen Seite ausbilden. Dadurch können vorteilhafte Abdeckeigenschaften erreicht werden. Vorteilhaft kann eine hohe Sicherheit erreicht werden, insbesondere gegen Teile, die sich bei der zum Wuchten eines Werkzeugs nötigen Rotation (mit Drehzahlen von bis zu 1200) des Werkzeugs lösen können, wie z.B. Wendeplatten. Zudem kann vorteilhaft eine äußere Designscheibe (das zweite transparente Element), insbesondere deren Innenseite, gegen Beschädigungen oder Verunreinigungen geschützt werden. Vorteilhaft kann eine einfache und kostengünstige Wiederaufbereitung, z.B. durch Austausch des ggf. einfacher ausgeführten und/oder günstigeren ersten transparenten Elements, erreicht werden. Zudem kann vorteilhaft eine hohe Auswahlmöglichkeit an Materialien / Gestaltungsformen der äußeren Designscheibe erreicht werden, insbesondere da die äußere Designscheibe nicht zwingend bestimmte Sicherheitsvoraussetzungen, wie Bruchfestigkeiten, Kratzfestigkeiten, Ölbeständigkeiten, Reinigungsmittelbeständigkeiten etc. erfüllen muss. Vorteilhaft kann eine hohe Langlebigkeit der Wuchtmaschinen-Schutzabdeckung erreicht werden.

Unter einer "Wuchtmaschinen-Schutzabdeckung" soll insbesondere ein, insbesondere funktionstüchtiger, Bestandteil, insbesondere eine Konstruktions- und/oder Funktionskomponente, einer Wuchtmaschine verstanden werden. Unter einer "Wuchtmaschine" soll insbesondere ein, insbesondere elektrisches, Gerät verstanden werden, das dazu vorgesehen ist, eine Wuchtgüte eines Werkzeugs zu bestimmen und vorteilhaft einen Wuchtvorgang an dem Werkzeug zu verrichten und/oder zu unterstützen. Insbesondere bildet die Wuchtmaschine einen Wuchtraum aus, welcher dazu vorgesehen ist, das zu wuchtende Werkzeug aufzunehmen. Insbesondere ist die Wuchtmaschine dazu vorgesehen, den Wuchtvorgang an dem in dem Wuchtraum angeordneten Werkzeug zu verrichten. Insbesondere umfasst der Wuchtraum zumindest eine Rotationsaufnahme für Werkzeuge, welche dazu vorgesehen ist, Werkzeuge zu haltern und zu rotieren. Insbesondere ist die Rotationsaufnahme dazu vorgesehen, Werkzeuge mit hohen Drehzahlen (>1000 Umdrehungen / Minute) zu rotieren. Das erste transparente Element und/oder das zweite transparente Element sind insbesondere jeweils aus einem Kunststoff ausgebildet. Das erste transparente Element und/oder das zweite transparente Element sind vorzugsweise frei von einem Filtereffekt für Licht und/oder frei von einer Einfärbung. Alternativ ist eine Ausgestaltung mit einer Einfärbung / Filterung jedoch auch denkbar. Insbesondere weist das erste transparente Element und/oder das zweite transparente Element eine Transparenz für weißes sichtbares Licht, insbesondere für Tageslicht, von wenigstens 70 %, vorzugsweise wenigstens 80 %, bevorzugt wenigstens 90 % auf. Insbesondere bilden das erste transparente Element und/oder das zweite transparente Element eine Scheibe, vorzugsweise eine Sichtscheibe, aus. Insbesondere sind jeweils eine Scheibenebene der Scheiben dem Wuchtraum zugewandt. Insbesondere ist die Rahmeneinheit zumindest zu einem Großteil aus einem Blech ausgebildet. Insbesondere ist die Rahmeneinheit als Blechgestell / Blechrahmen ausgebildet. Insbesondere ist das erste transparente Element und/oder das zweite transparente Element in der Rahmeneinheit befestigt, beispielsweise durch ein Einklemmen, durch ein Festschrauben, durch ein Festkleben oder durch eine weitere bekannte Befestigungsmethode. Insbesondere sind das erste transparente Element und das zweite transparente Element voneinander beabstandet angeordnet. Insbesondere sind das erste transparente Element und das zweite transparente Element zueinander berührungsfrei angeordnet. Alternativ sind jedoch auch Berührungspunkte zwischen dem ersten transparenten Element und/oder dem zweiten transparenten Element denkbar. Insbesondere sind die Scheibenebenen des ersten transparenten Elements und des zweiten transparenten Elements zueinander zumindest im Wesentlichen parallel ausgerichtet. Insbesondere ist ein Zwischenraum zwischen den beiden transparenten Elementen mit einer Raumluft gefüllt. Insbesondere ist der Zwischenraum zwischen den beiden transparenten Elementen zu einer Umgebung geöffnet oder zumindest nicht speziell zu der Umgebung hin abgedichtet.

Ferner wird vorgeschlagen, dass die transparenten Elemente derart ausgeformt und/oder angeordnet sind, dass sie den Wuchtraum zu zumindest einer zu der Seite zumindest im Wesentlichen senkrecht angeordneten weiteren Seite begrenzen können, vorzugsweise den Wuchtraum zumindest zu der Seite und zu der weiteren Seite, die zumindest im Wesentlichen senkrecht zu der Seite angeordnet ist, begrenzen, wobei die beiden transparenten Elemente derart von der Rahmeneinheit gehaltert sind, dass sie zusammen eine doppelwandige Begrenzung des Wuchtraums zumindest zu den zwei unterschiedlichen Seiten ausbilden. Dadurch können vorteilhafte Abdeckeigenschaften erreicht werden. Vorteilhaft kann eine besonders große, insbesondere einen besonders großen Teil des Wuchtraums begrenzende, Schutzabdeckung mit den vorbeschriebenen vorteilhaften Eigenschaften erreicht werden. Der Ausdruck "im Wesentlichen senkrecht" soll hier insbesondere eine Ausrichtung einer Richtung relativ zu einer Bezugsrichtung definieren, wobei die Richtung und die Bezugsrichtung, insbesondere in einer Projektionsebene betrachtet, einen Winkel von 90° einschließen und der Winkel eine maximale Abweichung von insbesondere kleiner als 8°, vorteilhaft kleiner als 5° und besonders vorteilhaft kleiner als 2° aufweist.

Zudem wird vorgeschlagen, dass die transparenten Elemente derart ausgeformt und/oder angeordnet sind, dass sie den Wuchtraum zu zumindest einer zu der Seite und zu der weiteren Seite zumindest im Wesentlichen senkrecht angeordneten zweiten weiteren Seite begrenzen können, vorzugsweise den Wuchtraum zumindest zu der Seite, zu der weiteren Seite, die zumindest im Wesentlichen senkrecht zu der Seite angeordnet ist und zu der zweiten weiteren Seite, die zumindest im Wesentlichen senkrecht zu der weiteren Seite angeordnet ist, begrenzen, wobei die beiden transparenten Elemente derart von der Rahmeneinheit gehaltert sind, dass sie zusammen eine doppelwandige Begrenzung des Wuchtraums zumindest zu den drei unterschiedlichen Seiten ausbilden. Dadurch können vorteilhafte Abdeckeigenschaften erreicht werden. Vorteilhaft kann eine besonders große, insbesondere einen besonders großen Teil des Wuchtraums begrenzende, Schutzabdeckung mit den vorbeschriebenen vorteilhaften Eigenschaften erreicht werden. Außerdem weist das erste transparente Element und/oder das zweite transparente Element vorzugsweise zumindest eine den Wuchtraum begrenzende dritte weitere Seite auf, welche insbesondere zumindest im Wesentlichen senkrecht zu der weiteren Seite und zu der zweiten weiteren Seite angeordnet ist. Insbesondere ist die dritte weitere Seite zumindest im Wesentlichen parallel zu der Seite angeordnet. Unter "im Wesentlichen parallel" soll hier insbesondere eine Ausrichtung einer Richtung relativ zu einer Bezugsrichtung, insbesondere in einer Ebene, verstanden werden, wobei die Richtung gegenüber der Bezugsrichtung eine Abweichung insbesondere kleiner als 8°, vorteilhaft kleiner als 5° und besonders vorteilhaft kleiner als 2° aufweist. Vorzugsweise begrenzt das erste transparente Element und/oder das zweite transparente Element den Wuchtraum der Wuchtmaschine von einer linken Seite, von einer rechten Seite, von oben und von vorne, insbesondere in einer Ansicht von vorne auf eine ordnungsgemäß aufgestellte Wuchtmaschine. Insbesondere bildet die Seite eine Vorderseite, insbesondere der Wuchtmaschinen-Schutzabdeckung, vorzugsweise der Wuchtmaschine, aus. Insbesondere bildet die weitere Seite eine linke Seite, insbesondere der Wuchtmaschinen-Schutzabdeckung, vorzugsweise der Wuchtmaschine, aus. Insbesondere bildet die zweite weitere Seite eine rechte Seite, insbesondere der Wuchtmaschinen-Schutzabdeckung, vorzugsweise der Wuchtmaschine, aus. Insbesondere bildet die dritte weitere Seite eine Oberseite, insbesondere der Wuchtmaschinen-Schutzabdeckung, vorzugsweise der Wuchtmaschine, aus. Alternativ ist auch denkbar, dass die zweite weitere Seite nicht doppelwandig ausgebildet ist. In diesem Fall erstreckt sich beispielsweise das erste transparente Element nur im Bereich der Seite (Vorderseite), der weiteren Seite (rechte Seite) und einer der weiteren Seite gegenüberliegenden weiteren Seite (linke Seite). Die zweite weitere Seite (Oberseite) wäre dann nicht doppelwandig, bzw. einzelwandig.

Des Weiteren wird vorgeschlagen, dass das erste transparente Element dem Wuchtraum zugewandt angeordnet ist und aus einem Material mit einer wesentlich höheren Bruchsicherheit und/oder Stoßfestigkeit ausgebildet ist als das zweite transparente Element. Dadurch können vorteilhafte Abdeckeigenschaften erreicht werden. Vorteilhaft kann eine hohe Designfreiheit in Kombination mit einer hohen Sicherheit erreicht werden. Unter der Wendung "wesentlich höher" soll insbesondere zumindest um 30 % höher, vorzugsweise zumindest um 45 % höher, bevorzugt zumindest um 60 % höher und besonders bevorzugt zumindest um 100 % höher verstanden werden. Insbesondere ist die Stoßfestigkeit durch eine Messung der Schlagfestigkeit nach Charpy bestimmbar. Beispielsweise kann das erste transparente Element mit einer Schlagfestigkeit nach Charpy von mehr als 80 versehen sein, während das zweite transparente Element eine um zumindest 30 % geringere Schlagfestigkeit nach Charpy, beispielsweise von weniger als 40 aufweist. Darunter, dass ein Element dem Wuchtraum zugewandt angeordnet ist soll insbesondere verstanden werden, dass das Element eine Oberfläche aufweist, welche direkt die Abgrenzung des Wuchtraums darstellt.

Weiterhin wird vorgeschlagen, dass das erste transparente Element dem Wuchtraum zugewandt angeordnet ist und eine Opferscheibe ausbildet. Dadurch kann vorteilhaft eine einfache Wiederaufbereitung der Wuchtmaschinen-Schutzabdeckung ermöglicht werden. Vorteilhaft können Kosten gesenkt und gleichzeitig eine hohe Designfreiheit erreicht werden. Unter einer "Opferscheibe" soll eine einfach austauschbare und/oder insbesondere eine ein auswechselbares Verschleißteil darstellende Scheibe verstanden werden. Darunter, dass das erste transparente Element dem Wuchtraum zugewandt angeordnet ist soll insbesondere verstanden werden, dass das erste transparente Element den Wuchtraum direkt begrenzt.

Wenn die Opferscheibe zerstörungsfrei auswechselbar, insbesondere an die Rahmeneinheit, montiert ist, kann vorteilhaft eine einfache Wiederaufbereitung der Wuchtmaschinen-Schutzabdeckung ermöglicht werden. Vorteilhaft kann eine lange Lebensdauer erreicht werden. Vorteilhaft kann eine Wartung wesentlich vereinfacht werden. Insbesondere ist die Opferscheibe wesentlich einfacher auswechselbar als das zweite transparente Element. Insbesondere ist das zweite transparente Element nur schwer oder nicht lösbar in der Rahmeneinheit montiert. Dadurch kann vorteilhaft eine hohe Sicherheit und/oder eine besonders solide Bauweise erreicht werden.

Wenn dabei die Opferscheibe über schnellwechselbare Montageelemente an die Rahmeneinheit montiert ist, kann vorteilhaft eine einfache Wiederaufbereitung der Wuchtmaschinen-Schutzabdeckung ermöglicht werden. Die schnellwechselbaren Montageelemente können als einfach zugängliche Schrauben oder Clips ausgebildet sein. Alternativ ist denkbar, dass die Opferscheibe über eine lösbare Rastverbindung der Rahmeneinheit in die Rahmeneinheit montiert ist. Es ist denkbar, dass das zweite transparente Element hingegen fest und/oder zumindest im Wesentlichen flüssigkeitsdicht in der Rahmeneinheit montiert, beispielsweise eingeklebt, verfugt oder dergleichen ist.

Wenn außerdem die Opferscheibe aus einem Polykarbonat ausgebildet ist, kann eine vorteilhaft hohe Bruchfestigkeit / Schlagfestigkeit erreicht werden. Vorteilhaft kann eine hohe Sicherheit gegen sich bei dem Wuchtvorgang lösende und nach außen geschleuderte Teile erreicht werden.

Des Weiteren wird vorgeschlagen, dass das zweite transparente Element einer Außenseite, insbesondere der Wuchtmaschine, zugewandt angeordnet ist und aus einem Acrylglas ausgebildet ist. Dadurch kann vorteilhaft eine hohe Designfreiheit und/oder eine hohe Lebensdauer erreicht werden. Darunter, dass ein Element der Außenseite zugewandt angeordnet ist soll insbesondere verstanden werden, dass das Element eine Oberfläche aufweist, welche direkt eine Außenhülle der Wuchtmaschine ausbildet. Insbesondere bildet das zweite transparente Element keine direkte Begrenzung / nur eine indirekte Begrenzung des Wuchtraums aus. Insbesondere bildet das zweite transparente Element einen Teil einer Designhülle der Wuchtmaschine aus. Insbesondere ist das zweite transparente Element auf zumindest einer seiner Seiten getönter als auf zumindest einer anderen seiner Seiten. Beispielsweise ist das zweite transparente Element auf einer zweiten weiteren Seite (auf der Oberseite) getönter als auf der weiteren Seite (linke oder rechte Seite) und/oder als auf der Seite (Vorderseite). Dadurch kann vorteilhaft eine optimale Sichtbarkeit in den Wuchtraum gewährleistet werden. Alternativ können jedoch auch andere Teilbereiche des zweiten transparenten Elements oder des ersten transparenten Elements getönt sein.

Zusätzlich wird vorgeschlagen, dass das erste transparente Element und/oder das zweite transparente Element in zumindest einer Raumrichtung, vorzugsweise in der in Richtung der Seite (Vorderseite) des Wuchtraums / einer Vorderseite der Wuchtmaschine, wesentlich über einen Raum hinaussteht, welcher gebildet ist durch einen gedachten kleinstmöglichen geometrischen Quader, welcher die Rahmeneinheit gerade noch vollständig umschließt. Dadurch kann vorteilhaft eine besonders ungehinderte Sicht in den Wuchtraum ermöglicht werden. Dadurch kann vorteilhaft eine hohe Sicherheit erreicht werden.

Wenn die Rahmeneinheit zumindest ein Scharnier umfasst, kann vorteilhaft ein einfaches Öffnen und Schließen der Wuchtmaschinen-Schutzabdeckung erreicht werden. Insbesondere weist die Rahmeneinheit zumindest zwei oder mehr Scharniere auf. Insbesondere ist die Rahmeneinheit über die Scharniere schwenkbar an einem Gehäuse der Wuchtmaschine gelagert. Insbesondere ist die Rahmeneinheit um eine in eine Aufstellrichtung der Wuchtmaschine verlaufende Schwenkachse schwenkbar gelagert. Alternativ ist jedoch auch eine schwenkbare Lagerung der Rahmeneinheit um eine senkrecht zu der Aufstellrichtung verlaufende Schwenkachse denkbar. Unter einer "Aufstellrichtung" soll insbesondere eine Raumrichtung verstanden werden, in die sich die Wuchtmaschine bei einer ordnungsgemäßen Aufstellung überwiegend erstreckt. Insbesondere ist die Aufstellrichtung als Vertikalrichtung ausgebildet oder zumindest im Wesentlichen parallel zu der Vertikalrichtung verlaufend ausgebildet. Unter "im Wesentlichen parallel" soll hier insbesondere eine Ausrichtung einer Richtung relativ zu einer Bezugsrichtung, insbesondere in einer Ebene, verstanden werden, wobei die Richtung gegenüber der Bezugsrichtung eine Abweichung insbesondere kleiner als 8°, vorteilhaft kleiner als 5° und besonders vorteilhaft kleiner als 2° aufweist.

Außerdem wird vorgeschlagen, dass eine gedachte, alle Vertikalseiten der Rahmeneinheit schneidende Ebene zu allen durch die transparenten Elemente gebildeten Scheibenebenen, insbesondere zumindest in einer Projektion auf eine Horizontalebene (in der Aufstellrichtung) betrachtet, wesentlich angewinkelt ist. Dadurch kann vorteilhaft eine besonders ungehinderte Sicht in den Wuchtraum ermöglicht werden. Dadurch kann vorteilhaft eine hohe Sicherheit erreicht werden. Vorteilhaft behindert der Rahmen eine Einsicht in den Wuchtraum dadurch möglichst wenig. Insbesondere ist die Rahmeneinheit verschieden von einem flachen quadratischen Rahmen ausgebildet. Insbesondere weist die Rahmeneinheit zumindest eine gebogene, geknickte und/oder zumindest ungerade Rahmenseite auf.

Wenn die Rahmeneinheit aus einem Blech gebildet ist, kann vorteilhaft eine hohe Stabilität und Lebensdauer erreicht werden.

Weiterhin wird vorgeschlagen, dass das erste transparente Element und/oder das zweite transparente Element frei von Symmetrieachsen ausgebildet ist. Dadurch kann vorteilhaft eine besonders ungehinderte Sicht in den Wuchtraum ermöglicht werden. Dadurch kann vorteilhaft eine hohe Sicherheit erreicht werden. Zudem kann vorteilhaft eine besonders hohe Designfreiheit erreicht werden. Insbesondere weisen alle Seiten des ersten transparenten Elements zueinander unterschiedliche Abmessungen auf. Insbesondere weisen alle Seiten des zweiten transparenten Elements zueinander unterschiedliche Abmessungen auf.

Zudem wird vorgeschlagen, dass ein Abstand von, insbesondere aufeinander zuweisenden, Scheibenebenen des ersten transparenten Elements und des zweiten transparenten Elements wenigstens 0,3 cm, vorzugsweise wenigstens 0,5 cm und bevorzugt wenigstens 1 cm beträgt. Dadurch kann vorteilhaft eine hohe Sicherheit erreicht werden. Zudem kann vorteilhaft ein einfaches Auswechseln ermöglicht werden.

Zusätzlich wird vorgeschlagen, dass zumindest das zweite transparente Element eine Greifausnehmung ausbildet. Dadurch kann vorteilhaft eine einfache manuelle Bedienung der Wuchtmaschinen-Schutzabdeckung erreicht werden. Insbesondere erlaubt die Greifausnehmung einen Eingriff in einen Zwischenraum zwischen dem ersten transparenten Element und dem zweiten transparenten Element. Insbesondere ist die Greifausnehmung auf der Seite (Vorderseite) des zweiten transparenten Elements angeordnet. Insbesondere ist die Greifausnehmung in einem in Aufstellrichtung gesehen unteren Bereich / an einer unteren Kante des zweiten transparenten Elements angeordnet.

Ferner wird eine Wuchtmaschine mit der Wuchtmaschinen-Schutzabdeckung und ein Verfahren zu einer Wiederaufbereitung der Wuchtmaschinen-Schutzabdeckung vorgeschlagen, bei welchem ein beschädigtes und/oder gealtertes dem Wuchtraum zugewandtes (erstes) transparentes Element entfernt wird und durch ein zumindest im Wesentlichen identisches, neues (erstes) transparentes Element ersetzt wird. Dadurch kann vorteilhaft eine hohe Sicherheit und/oder eine hohe Lebensdauer erreicht werden.

Die erfindungsgemäße Wuchtmaschinen-Schutzabdeckung, die erfindungsgemäße Wuchtmaschine und das erfindungsgemäße Verfahren soll hierbei nicht auf die oben beschriebene Anwendung und Ausführungsform beschränkt sein. Insbesondere kann die erfindungsgemäße Wuchtmaschinen-Schutzabdeckung, die erfindungsgemäße Wuchtmaschine und das erfindungsgemäße Verfahren zu einer Erfüllung einer hierin beschriebenen Funktionsweise eine von einer hierin genannten Anzahl von einzelnen Elementen, Bauteilen und Einheiten abweichende Anzahl aufweisen.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: Eine schematische perspektivische Darstellung einer Wuchtmaschine mit einer Wuchtmaschinen-Schutzabdeckung,
- Fig. 2: die Wuchtmaschinen-Schutzabdeckung in einer ersten schematischen perspektivischen Ansicht,
- Fig. 3: die Wuchtmaschinen-Schutzabdeckung in einer Schnittansicht entlang der Schnittebene I aus der Fig. 2,
- Fig. 4: die Wuchtmaschinen-Schutzabdeckung in einer zweiten schematischen perspektivischen Ansicht und
- Fig. 5: ein Ablaufdiagramm eines Verfahrens zu einer Wiederaufbereitung der Wuchtmaschinen-Schutzabdeckung.

### Beschreibung des Ausführungsbeispiels

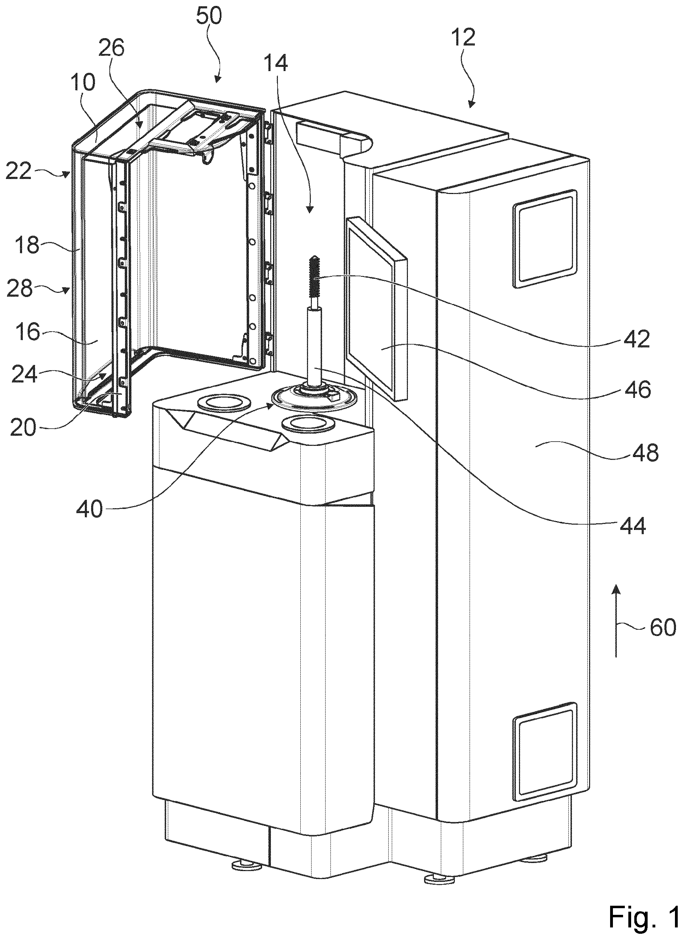

Die Fig. 1 zeigt eine schematische perspektivische Darstellung einer Wuchtmaschine 14. Die Wuchtmaschine 14 bildet einen Wuchtraum 12 aus. Die Wuchtmaschine 14 weist eine in dem Wuchtraum 12 angeordnete Rotationsaufnahme 40 (Drehspindeleinheit) auf. Die Wuchtmaschine 14 ist zu einem Wuchten von Werkzeugen 42 vorgesehen. Die Wuchtmaschine 14 ist zu einem Wuchten von Werkzeugaufnahmen 44 (Werkzeugfuttern) vorgesehen. Die Wuchtmaschine 14 ist zu einem Wuchten von Werkzeugeinheiten (Werkzeugaufnahmen 44, in denen ein Werkzeug 42 befestigt ist) vorgesehen. Die Wuchtmaschine 14 weist eine Bedieneinheit 46 auf. Die Bedieneinheit 46 ist zu einer Einstellung, Steuerung und/oder Überwachung des Betriebs der Wuchtmaschine 14 vorgesehen. Die Wuchtmaschine 14 weist einen Grundkörper 48 auf. Der Grundkörper 48 trägt die Rotationsaufnahme 40. Der Grundkörper 48 trägt die Bedieneinheit 46. Der Grundkörper 48 ist in einer Aufstellrichtung 60 aufgestellt dargestellt.

Die Wuchtmaschine 14 weist eine Wuchtmaschinen-Schutzabdeckung 10 auf. Der Grundkörper 48 trägt die Wuchtmaschinen-Schutzabdeckung 10. Die Wuchtmaschinen-Schutzabdeckung 10 ist zu einem temporären Verschließen des Wuchtraums 12 vorgesehen. Die Wuchtmaschinen-Schutzabdeckung 10 weist eine Rahmeneinheit 20 auf. Die Rahmeneinheit 20 ist aus einem Blech gebildet. Die Rahmeneinheit 20 umfasst Scharniere 30. Die Wuchtmaschinen-Schutzabdeckung 10 ist über die Scharniere 30 an dem Grundkörper 48 beweglich und/oder rotierbar angelenkt.

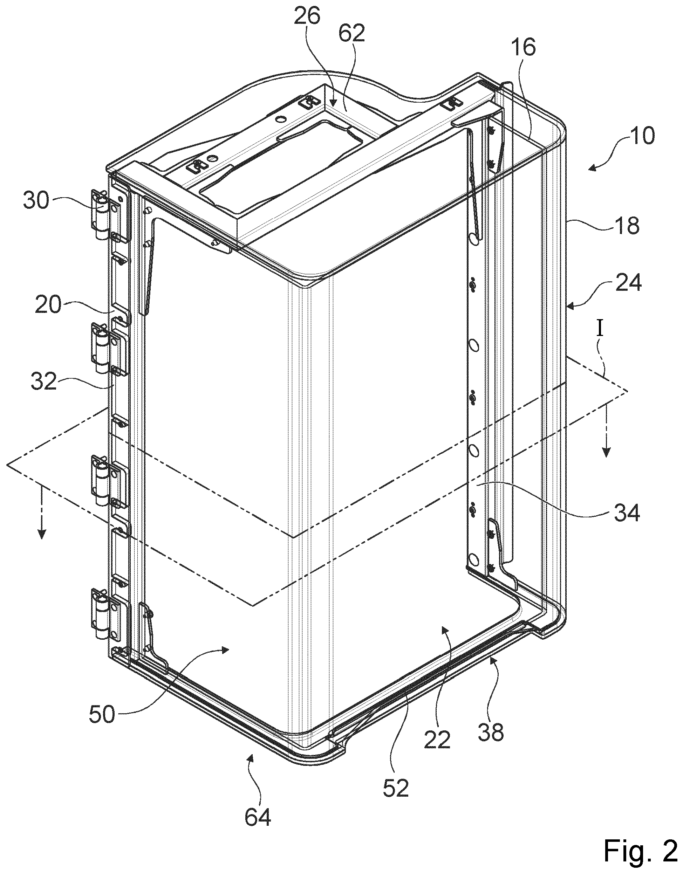

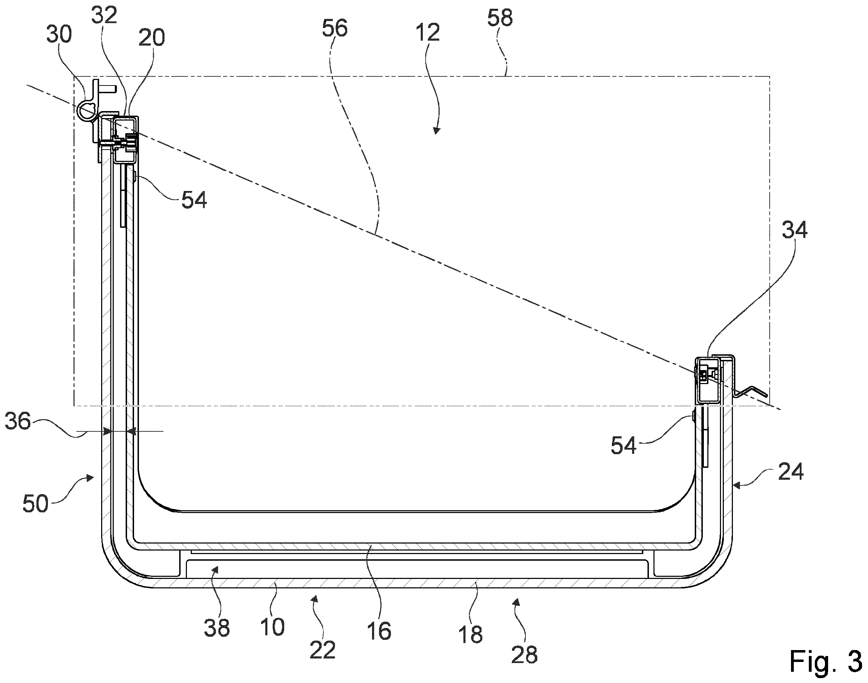

Die Figur 2 zeigt eine schematische perspektivische Darstellung der Wuchtmaschinen-Schutzabdeckung 10. Die Wuchtmaschinen-Schutzabdeckung 10 weist ein erstes transparentes Element 16 auf (siehe auch Fig. 3). Die Wuchtmaschinen-Schutzabdeckung 10 weist ein zweites transparentes Element 18 auf (siehe auch Fig. 3). Die transparenten Elemente 16, 18 sind derart ausgeformt und angeordnet, dass sie den Wuchtraum 12 zu einer, eine Vorderseite der Wuchtmaschine 14 teilweise ausbildenden Seite 22 begrenzen. Die transparenten Elemente 16, 18 sind derart ausgeformt und angeordnet, dass sie den Wuchtraum 12 zu einer eine rechte Seite der Wuchtmaschine 14 teilweise ausbildenden weiteren Seite 24 begrenzen. Die Seite 22 und die weitere Seite 24 sind senkrecht zueinander angeordnet. Die transparenten Elemente 16, 18 sind derart ausgeformt und angeordnet, dass sie den Wuchtraum 12 zu einer eine linke Seite der Wuchtmaschine 14 teilweise ausbildenden gegenüberliegenden weiteren Seite 50 begrenzen. Die Seite 22 und die gegenüberliegende weitere Seite 50 sind senkrecht zueinander angeordnet. Die weitere Seite 24 und die gegenüberliegende weitere Seite 50 sind parallel zueinander angeordnet. Die transparenten Elemente 16, 18 sind derart ausgeformt und angeordnet, dass sie den Wuchtraum 12 zu einer eine Oberseite der Wuchtmaschine 14 teilweise ausbildenden zweiten weiteren Seite 26 begrenzen. Die Seite 22, die weitere Seite 24 und die zweite weitere Seite 26 sind jeweils senkrecht zueinander angeordnet. Die Seite 22, die gegenüberliegende weitere Seite 50 und die zweite weitere Seite 26 sind jeweils senkrecht zueinander angeordnet.

Die beiden transparenten Elemente 16, 18 sind derart von der Rahmeneinheit 20 gehaltert, dass sie zusammen eine doppelwandige Begrenzung des Wuchtraums 12 zu der Seite 22 (Vorderseite) ausbilden. Die beiden transparenten Elemente 16, 18 sind derart von der Rahmeneinheit 20 gehaltert, dass sie zusammen eine doppelwandige Begrenzung des Wuchtraums 12 zu der weiteren Seite 24 (rechte Seite) ausbilden. Die beiden transparenten Elemente 16, 18 sind derart von der Rahmeneinheit 20 gehaltert, dass sie zusammen eine doppelwandige Begrenzung des Wuchtraums 12 zu der gegenüberliegenden weiteren Seite 50 (linke Seite) ausbilden. Die beiden transparenten Elemente 16, 18 können derart von der Rahmeneinheit 20 gehaltert sein, dass sie zusammen eine doppelwandige Begrenzung des Wuchtraums 12 zu der zweiten weiteren Seite 26 (Oberseite) ausbilden könnten. Im beispielhaft in den Figuren dargestellten Fall erstreckt sich die Doppelwandigkeit jedoch nur über die Seite 22, die weitere Seite 24 und die gegenüberliegende weitere Seite 50. Die zweite weitere Seite 26 ist frei von dem ersten transparenten Element 16. Das erste transparente Element 16 erstreckt sich über die Seite 22 (Vorderseite), die weitere Seite 24 (rechte Seite) und die gegenüberliegende weitere Seite 50 (linke Seite). Das erste transparente Element 16 ist einstückig ausgebildet. Das zweite transparente Element 18 erstreckt sich über die Seite 22 (Vorderseite), die weitere Seite 24 (rechte Seite), die zweite weitere Seite 26 (Oberseite) und die gegenüberliegende weitere Seite 50 (linke Seite). Das zweite transparente Element 18 kann dabei einstückig ausgebildet sein, oder wie im Fig. 2 dargestellten Fall in zwei Teile aufgeteilt sein, wobei ein Teil die zweite weitere Seite 26 (Oberseite) begrenzt und die anderen Teile die restlichen Seiten 22, 24, 50 begrenzen. Das zweite transparente Element 18 bildet eine Greifausnehmung 38 aus. Die Greifausnehmung 38 ist im Bereich einer unteren Kante 52 des zweiten transparenten Elements 18 angeordnet. Das erste transparente Element 16 ist frei von Symmetrieachsen ausgebildet. Das zweite transparente Element 18 ist frei von Symmetrieachsen ausgebildet. Das erste transparente Element 16 steht in zumindest einer Raumrichtung, insbesondere in Richtung der Vorderseite der Wuchtmaschine 14 über einen Raum hinaus, welcher gebildet ist durch einen gedachten kleinstmöglichen geometrischen Quader 58, welcher die Rahmeneinheit 20 gerade noch vollständig umschließt (siehe auch Fig. 3). Die Rahmeneinheit 20 zumindest weist eine gebogene, geknickte und/oder ungerade Rahmenseite 62 auf. Die gebogene, geknickte und/oder ungerade Rahmenseite 62 bildet eine obere Seite der Rahmeneinheit 20 aus. Die Rahmeneinheit 20 weist zwei Vertikalseiten 32, 34, insbesondere seitliche Rahmenseiten, auf. Die Vertikalseiten 32, 34 sind zumindest im Wesentlichen gerade. Die Rahmeneinheit 20 ist frei von einer unteren Rahmenseite ausgebildet. Die Rahmeneinheit 20 ist ungeschlossen. Die Rahmeneinheit 20 ist nach unten geöffnet.

Die Fig. 3 zeigt einen schematischen horizontalen Schnitt durch die Wuchtmaschinen-Schutzabdeckung 10. Das erste transparente Element 16 ist dem Wuchtraum 12 zugewandt angeordnet. Das erste transparente Element 16 ist aus einem Material mit einer wesentlich höheren Bruchsicherheit ausgebildet als das zweite transparente Element 18. Das erste transparente Element 16 ist aus einem Material mit einer wesentlich höheren Stoßfestigkeit ausgebildet als das zweite transparente Element 18. Das erste transparente Element 16 ist aus einem Polykarbonat ausgebildet. Das zweite transparente Element 18 ist einer Außenseite 28 zugewandt angeordnet. Das zweite transparente Element 18 ist aus einem Acrylglas ausgebildet. Das zweite transparente Element 18 bildet eine Designaußenscheibe der Wuchtmaschine 14 aus. Ein Abstand 36, insbesondere ein minimaler Abstand, von Scheibenebenen des ersten transparenten Elements 16 und des zweiten transparenten Elements 18 beträgt wenigstens 0,3 cm, vorzugsweise wenigstens 0,5 cm und bevorzugt wenigstens 1 cm.

Das erste transparente Element 16 weist eine geringere Dicke auf als das zweite transparente Element 18. Das erste transparente Element 16 weist eine um wenigstens 20% geringere Dicke auf als das zweite transparente Element 18. Das erste transparente Element 16 bildet eine Opferscheibe aus. Das erste transparente Element 16 und das zweite transparente Element 18 sind an der gemeinsamen Rahmeneinheit 20 befestigt. Die Opferscheibe ist zerstörungsfrei auswechselbar an die Rahmeneinheit 20 montiert. Die Opferscheibe ist über schnellwechselbare Montageelemente 54 an die Rahmeneinheit 20 montiert. Eine gedachte, alle Vertikalseiten 32, 34 der Rahmeneinheit 20 schneidende Ebene 56 ist zu allen durch die transparenten Elemente 16, 18 gebildeten Scheibenebenen, insbesondere zumindest in einer Projektion auf eine Horizontalebene betrachtet, wie es z.B. in Fig. 3 dargestellt ist, wesentlich angewinkelt.

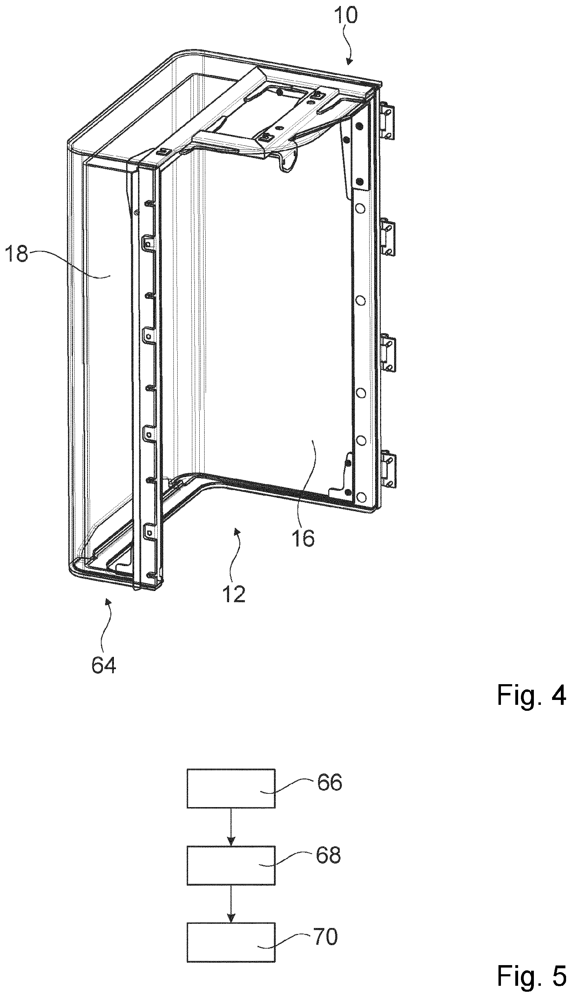

Die Fig. 4 zeigt eine schematische perspektivische Darstellung der Wuchtmaschinen-Schutzabdeckung 10 aus einer weiteren Perspektive. Das zweite transparente Element 18 steht auf einer Unterseite 64 der Wuchtmaschinen-Schutzabdeckung 10 in Richtung des Wuchtraums 12 über das erste transparente Element 16 leicht über.

Die Fig. 5 zeigt ein schematisches Ablaufdiagramm eines Verfahrens zu einer Wiederaufbereitung der Wuchtmaschinen-Schutzabdeckung 10. In zumindest einem Verfahrensschritt 66 wird eine Beschädigung / ein Verschleiß des ersten transparenten Elements 16 festgestellt. In zumindest einem weiteren Verfahrensschritt 68 wird das beschädigte und/oder gealterte erste transparente Element 16 entfernt. Dabei werden die Montageelemente 54 demontiert und das beschädigte / verschlissene erste transparente Element 16 wird aus der Rahmeneinheit 20 entnommen. In zumindest einem weiteren Verfahrensschritt 70 wird ein zu dem ersten transparenten Element 16 zumindest im Wesentlichen identisches, neues transparentes Element in die Rahmeneinheit 20 eingesetzt, Dabei werden die Montageelemente 54 wieder montiert. Das neue transparente Element ersetzt das verschlissene / beschädigte erste transparente Element 16.

### Bezugszeichen

- 10: Wuchtmaschinen-Schutzabdeckung
- 12: Wuchtraum
- 14: Wuchtmaschine
- 16: Erstes transparentes Element
- 18: Zweites transparentes Element
- 20: Rahmeneinheit
- 22: Seite
- 24: Weitere Seite
- 26: Zweite weitere Seite
- 28: Außenseite
- 30: Scharnier
- 32: Vertikalseite
- 34: Vertikalseite
- 36: Abstand
- 38: Greifausnehmung
- 40: Rotationsaufnahme
- 42: Werkzeug
- 44: Werkzeugaufnahme
- 46: Bedieneinheit
- 48: Grundkörper
- 50: Gegenüberliegende weitere Seite
- 52: Kante
- 54: Montageelement
- 56: Ebene
- 58: Quader
- 60: Aufstellrichtung
- 62: Rahmenseite
- 64: Unterseite
- 66-70: Verfahrensschritt

## Patentansprüche

1. Wuchtmaschinen-Schutzabdeckung (10) zu einem zumindest temporären Verschließen eines Wuchtraums (12) einer Wuchtmaschine (14), mit zumindest einem ersten transparenten Element (16), mit zumindest einem zweiten transparenten Element (18) und mit einer Rahmeneinheit (20), **dadurch gekennzeichnet, dass** die transparenten Elemente (16, 18) derart ausgeformt und/oder angeordnet sind, dass sie den Wuchtraum (12) zu zumindest einer Seite (22) begrenzen können **und dass** die beiden transparenten Elemente (16, 18) derart von der Rahmeneinheit (20) gehaltert sind, dass sie zusammen eine doppelwandige Begrenzung des Wuchtraums (12) zu der zumindest einen Seite (22) ausbilden.

2. Wuchtmaschinen-Schutzabdeckung (10) nach Anspruch 1, **dadurch gekennzeichnet, dass** die transparenten Elemente (16, 18) derart ausgeformt und/oder angeordnet sind, dass sie den Wuchtraum (12) zu zumindest einer zu der Seite (22) zumindest im Wesentlichen senkrecht angeordneten weiteren Seite (24) begrenzen können **und dass** die beiden transparenten Elemente (16, 18) derart von der Rahmeneinheit (20) gehaltert sind, dass sie zusammen eine doppelwandige Begrenzung des Wuchtraums (12) zumindest zu den zwei unterschiedlichen Seiten (22, 24) ausbilden.

3. Wuchtmaschinen-Schutzabdeckung (10) nach Anspruch 2, **dadurch gekennzeichnet, dass** die transparenten Elemente (16, 18) derart ausgeformt und/oder angeordnet sind, dass sie den Wuchtraum (12) zu zumindest einer zu der Seite (22) und zu der weiteren Seite (24) zumindest im Wesentlichen senkrecht angeordneten zweiten weiteren Seite (26) begrenzen können **und dass** die beiden transparenten Elemente (16, 18) derart von der Rahmeneinheit (20) gehaltert sind, dass sie zusammen eine doppelwandige Begrenzung des Wuchtraums (12) zumindest zu den drei unterschiedlichen Seiten (22, 24, 26) ausbilden.

4. Wuchtmaschinen-Schutzabdeckung (10) nach einem der vorhergehenden Ansprüche, **dadurch gekennzeichnet, dass** das erste transparente Element (16) dem Wuchtraum (12) zugewandt angeordnet ist und aus einem Material mit einer wesentlich höheren Bruchsicherheit und/oder Stoßfestigkeit ausgebildet ist als das zweite transparente Element (18).

5. Wuchtmaschinen-Schutzabdeckung (10) nach einem der vorhergehenden Ansprüche, **dadurch gekennzeichnet, dass** das erste transparente Element (16) dem Wuchtraum (12) zugewandt angeordnet ist und eine Opferscheibe ausbildet.

6. Wuchtmaschinen-Schutzabdeckung (10) nach Anspruch 5, **dadurch gekennzeichnet, dass** die Opferscheibe zerstörungsfrei auswechselbar, insbesondere an die Rahmeneinheit (20), montiert ist.

7. Wuchtmaschinen-Schutzabdeckung (10) nach Anspruch 5 oder 6,
**dadurch gekennzeichnet, dass** die Opferscheibe über schnellwechselbare Montageelemente (54) an die Rahmeneinheit (20) montiert ist.

8. Wuchtmaschinen-Schutzabdeckung (10) nach einem der Ansprüche 5 bis 7, **dadurch gekennzeichnet, dass** die Opferscheibe aus einem Polykarbonat ausgebildet ist.

9. Wuchtmaschinen-Schutzabdeckung (10) nach einem der vorhergehenden Ansprüche, **dadurch gekennzeichnet, dass** das zweite transparente Element (18) einer Außenseite (28) zugewandt angeordnet ist und aus einem Acrylglas ausgebildet ist.

10. Wuchtmaschinen-Schutzabdeckung (10) nach einem der vorhergehenden Ansprüche, **dadurch gekennzeichnet, dass** das erste transparente Element (16) und/oder das zweite transparente Element (18) in zumindest einer Raumrichtung wesentlich über einen Raum hinaussteht, welcher gebildet ist durch einen gedachten kleinstmöglichen geometrischen Quader (58), welcher die Rahmeneinheit (20) gerade noch vollständig umschließt.

11. Wuchtmaschinen-Schutzabdeckung (10) nach einem der vorhergehenden Ansprüche, **dadurch gekennzeichnet, dass** die Rahmeneinheit (20) zumindest ein Scharnier (30) umfasst.

12. Wuchtmaschinen-Schutzabdeckung (10) nach einem der vorhergehenden Ansprüche, **dadurch gekennzeichnet, dass** eine gedachte, alle Vertikalseiten (32, 34) der Rahmeneinheit (20) schneidende Ebene (56) zu allen durch die transparenten Elemente (16, 18) gebildeten Scheibenebenen, insbesondere zumindest in einer Projektion auf eine Horizontalebene betrachtet, wesentlich angewinkelt ist.

13. Wuchtmaschinen-Schutzabdeckung (10) nach einem der vorhergehenden Ansprüche, **dadurch gekennzeichnet, dass** die Rahmeneinheit (20) aus einem Blech gebildet ist.

14. Wuchtmaschinen-Schutzabdeckung (10) nach einem der vorhergehenden Ansprüche, **dadurch gekennzeichnet, dass** das erste transparente Element (16) und/oder das zweite transparente Element (18) frei von Symmetrieachsen ausgebildet ist.

15. Wuchtmaschinen-Schutzabdeckung (10) nach einem der vorhergehenden Ansprüche, **dadurch gekennzeichnet, dass** ein Abstand (36) von Scheibenebenen des ersten transparenten Elements (16) und des zweiten transparenten Elements (18) wenigstens 0,3 cm, vorzugsweise wenigstens 0,5 cm und bevorzugt wenigstens 1 cm beträgt

16. Wuchtmaschinen-Schutzabdeckung (10) nach einem der vorhergehenden Ansprüche, **dadurch gekennzeichnet, dass** zumindest das zweite transparente Element (18) eine Greifausnehmung (38) ausbildet.

17. Wuchtmaschine (14) mit einer Wuchtmaschinen-Schutzabdeckung (10) nach einem der vorhergehenden Ansprüche.

18. Verfahren zu einer Wiederaufbereitung einer Wuchtmaschinen-Schutzabdeckung (10) nach einem der Ansprüche 1 bis 16, **dadurch gekennzeichnet, dass** ein beschädigtes und/oder gealtertes dem Wuchtraum (12) zugewandtes transparentes Element (16) entfernt wird und durch ein zumindest im Wesentlichen identisches, neues transparentes Element (16) ersetzt wird.

## Claims

1. A balancing machine protective cover (10) for an at least temporary closing of a balancing chamber (12) of a balancing machine (14), with at least one first transparent element (16), with at least one second transparent element (18) and with a frame unit (20), **characterized in that** the transparent elements (16, 18) are shaped and/or arranged in such a way that they can delimit the balancing chamber (12) to at least one side (22), **and that** the two transparent elements (16, 18) are held by the frame unit (20) in such a way that they together form a double-wallet delimitation of the balancing chamber (12) to the at least one side (22).

2. The balancing machine protective cover (10) according to claim 1,
**characterized in that** the transparent elements (16, 18) are shaped and/or arranged in such a way that they can delimit the balancing chamber (12) to at least one further side (24), which is arranged at least substantially perpendicular to the side (22), **and that** the two transparent elements (16, 18) are held by the frame unit (20) in such a way that they together form a double-walled delimitation of the balancing chamber (12) at least to the two different sides (22, 24).

3. The balancing machine protective cover (10) according to claim 2,
**characterized in that** the transparent elements (16, 18) are shaped and/or arranged in such a way that they can delimit the balancing chamber (12) to at least one second further side (26), which is arranged at least substantially perpendicular to the side (22) and to the further side (24),
**and that** the two transparent elements (16, 18) are held by the frame unit (20) in such a way that they together form a double-walled delimitation of the balancing chamber (12) at least to the three different sides (22, 24, 26).

4. The balancing machine protective cover (10) according to any one of the preceding claims, **characterized in that** the first transparent element (16) is arranged so as to face towards the balancing chamber (12) and is made of a material having a significantly higher break safety and/or shock strength than the second transparent element (18).

5. The balancing machine protective cover (10) according to any one of the preceding claims, **characterized in that** the first transparent element (16) is arranged so as to face towards the balancing chamber (12) and forms a sacrificial pane.

6. The balancing machine protective cover (10) according to claim 5,
**characterized in that** the sacrificial pane is mounted, in particular on the frame unit (20), in a non-destructively exchangeable manner.

7. The balancing machine protective cover (10) according to claim 5 or 6,
**characterized in that** the sacrificial pane is mounted on the frame unit (20) via quick-exchangeable mounting elements (54).

8. The balancing machine protective cover (10) according to any one of claims 5 to 7, **characterized in that** the sacrificial pane is made of a polycarbonate.

9. The balancing machine protective cover (10) according to any one of the preceding claims, **characterized in that** the second transparent element (18) is arranged so as to face an outer side (28) and is made of an acrylic glass.

10. The balancing machine protective cover (10) according to any one of the preceding claims, **characterized in that** the first transparent element (16) and/or the second transparent element (18) substantially projects in at least one spatial direction beyond a space formed by a smallest possible imaginary geometric cuboid (58) which just still completely encloses the frame unit (20).

11. The balancing machine protective cover (10) according to any one of the preceding claims, **characterized in that** the frame unit (20) comprises at least one hinge (30).

12. The balancing machine protective cover (10) according to any one of the preceding claims, **characterized in that,** in particular viewed at least in a projection onto a horizontal plane, an imaginary plane (56) intersecting with all vertical sides (32, 34) of the frame unit (20) is substantially angled with respect to all pane planes formed by the transparent elements (16, 18).

13. The balancing machine protective cover (10) according to any one of the preceding claims, **characterized in that** the frame unit (20) is formed of sheet metal.

14. The balancing machine protective cover (10) according to any one of the preceding claims, **characterized in that** the first transparent element (16) and/or the second transparent element (18) are/is realized free of symmetry axes.

15. The balancing machine protective cover (10) according to any one of the preceding claims, **characterized in that** a spacing (36) of pane planes of the first transparent element (16) and of the second transparent element (18) is at least 0.3 cm, preferably at least 0.5 cm and preferentially at least 1 cm.

16. The balancing machine protective cover (10) according to any one of the preceding claims, **characterized in that** at least the second transparent element (18) forms a gripping recess (38).

17. A balancing machine (14) with a balancing machine protective cover (10) according to any one of the preceding claims.

18. A method for refurbishing a balancing machine protective cover (10) according to any one of claims 1 to 16, **characterized in that** a damaged and/or aged transparent element (16) that faces towards the balancing chamber (12) is removed and is replaced by a new transparent element (16) that is at least substantially identical.

## Revendications

1. Couvercle de protection de machine d'équilibrage (10) pour une fermeture au moins temporaire d'un espace d'équilibrage (12) d'une machine d'équilibrage (14), avec au moins un premier élément transparent (16), avec au moins un deuxième élément transparent (18) et avec une unité de cadre (20), **caractérisé en ce que** les éléments transparents (16, 18) sont formés et/ou disposés de telle sorte qu'ils peuvent délimiter l'espace d'équilibrage (12) vers au moins un côté (22) **et en ce que** les deux éléments transparents (16, 18) sont maintenus par l'unité de cadre (20) de telle sorte qu'ils forment conjointement une délimitation à double paroi de l'espace d'équilibrage (12) vers l'au moins un côté (22).

2. Couvercle de protection de machine d'équilibrage (10) selon la revendication 1, **caractérisé en ce que** les éléments transparents (16, 18) sont formés et/ou disposés de telle sorte qu'ils peuvent délimiter l'espace d'équilibrage (12) vers au moins un autre côté (24) disposé au moins sensiblement perpendiculairement au côté (22) **et en ce que** les deux éléments transparents (16, 18) sont maintenus par l'unité de cadre (20) de telle sorte qu'ils forment conjointement une délimitation à double paroi de l'espace d'équilibrage (12) au moins vers les deux côtés différents (22, 24).

3. Couvercle de protection de machine d'équilibrage (10) selon la revendication 2, **caractérisé en ce que** les éléments transparents (16, 18) sont formés et/ou disposés de telle sorte qu'ils peuvent délimiter l'espace d'équilibrage (12) vers au moins un deuxième autre côté (26) disposé au moins sensiblement perpendiculairement au côté (22) et à l'autre côté (24) **et en ce que** les deux éléments transparents (16, 18) sont maintenus par l'unité de cadre (20) de telle sorte qu'ils forment conjointement une délimitation à double paroi de l'espace d'équilibrage (12) au moins vers les trois côtés différents (22, 24, 26).

4. Couvercle de protection de machine d'équilibrage (10) selon l'une quelconque des revendications précédentes, **caractérisé en ce que** le premier élément transparent (16) est disposé tourné vers l'espace d'équilibrage (12) et est réalisé en un matériau avec une résistance à la rupture et/ou résistance aux chocs sensiblement plus élevée que le deuxième élément transparent (18).

5. Couvercle de protection de machine d'équilibrage (10) selon l'une quelconque des revendications précédentes, **caractérisé en ce que** le premier élément transparent (16) est disposé tourné vers l'espace d'équilibrage (12) et forme un disque sacrificiel.

6. Couvercle de protection de machine d'équilibrage (10) selon la revendication 5, **caractérisé en ce que** le disque sacrificiel est monté de manière remplaçable sans destruction, en particulier sur l'unité de cadre (20).

7. Couvercle de protection de machine d'équilibrage (10) selon la revendication 5 ou 6, **caractérisé en ce que** le disque sacrificiel est monté sur l'unité de cadre (20) par le biais d'éléments de montage (54) remplaçables rapidement.

8. Couvercle de protection de machine d'équilibrage (10) selon l'une quelconque des revendications 5 à 7, **caractérisé en ce que** le disque sacrificiel est réalisé en un polycarbonate.

9. Couvercle de protection de machine d'équilibrage (10) selon l'une quelconque des revendications précédentes, **caractérisé en ce que** le deuxième élément transparent (18) est disposé tourné vers un côté extérieur (28) et est réalisé en un verre acrylique.

10. Couvercle de protection de machine d'équilibrage (10) selon l'une quelconque des revendications précédentes, **caractérisé en ce que** le premier élément transparent (16) et/ou le deuxième élément transparent (18) fait saillie dans au moins une direction spatiale sensiblement au-delà d'un espace, qui est formé par un parallélépipède (58) géométrique imaginaire le plus petit possible, qui entoure juste encore complètement l'unité de cadre (20).

11. Couvercle de protection de machine d'équilibrage (10) selon l'une quelconque des revendications précédentes, **caractérisé en ce que** l'unité de cadre (20) comprend au moins une charnière (30).

12. Couvercle de protection de machine d'équilibrage (10) selon l'une quelconque des revendications précédentes, **caractérisé en ce qu'**un plan (56) imaginaire coupant tous les côtés verticaux (32, 34) de l'unité de cadre (20) est sensiblement coudé par rapport à tous les plans de disque formés par les éléments transparents (16, 18), en particulier au moins dans une projection sur un plan horizontal.

13. Couvercle de protection de machine d'équilibrage (10) selon l'une quelconque des revendications précédentes, **caractérisé en ce que** l'unité de cadre (20) est formée à partir d'une tôle.

14. Couvercle de protection de machine d'équilibrage (10) selon l'une quelconque des revendications précédentes, **caractérisé en ce que** le premier élément transparent (16) et/ou le deuxième élément transparent (18) est ou sont réalisé(s) sans axes de symétrie.

15. Couvercle de protection de machine d'équilibrage (10) selon l'une quelconque des revendications précédentes, **caractérisé en ce qu'**une distance (36) des plans de disque du premier élément transparent (16) et du deuxième élément transparent (18) est d'au moins 0,3 cm, de préférence d'au moins 0,5 cm et de préférence d'au moins 1 cm.

16. Couvercle de protection de machine d'équilibrage (10) selon l'une quelconque des revendications précédentes, **caractérisé en ce qu'**au moins le deuxième élément transparent (18) forme un évidement de préhension (38).

17. Machine d'équilibrage (14) avec un couvercle de protection de machine d'équilibrage (10) selon l'une quelconque des revendications précédentes.

18. Procédé pour un retraitement d'un couvercle de protection de machine d'équilibrage (10) selon l'une quelconque des revendications 1 à 16, **caractérisé en ce qu'**un élément transparent (16) endommagé et/ou vieilli tourné vers l'espace d'équilibrage (12) est enlevé et est remplacé par un nouvel élément transparent (16) au moins sensiblement identique.
